(19) Europäisches Patentamt
European Patent Office
Office européen des brevets

(11) **EP 2 506 415 A1**

(12) **EUROPEAN PATENT APPLICATION**
published in accordance with Art. 153(4) EPC

(43) Date of publication:
**03.10.2012 Bulletin 2012/40**

(51) Int Cl.:
*H02M 7/49* (2007.01)    *H02M 7/5387* (2007.01)

(21) Application number: **10833100.0**

(22) Date of filing: **16.11.2010**

(86) International application number:
**PCT/JP2010/070353**

(87) International publication number:
**WO 2011/065253 (03.06.2011 Gazette 2011/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2009 JP 2009268288**

(71) Applicant: **Hitachi, Ltd.**
**Chiyoda-ku**
**Tokyo 100-8280 (JP)**

(72) Inventors:
• **INOUE Shigenori**
**Hitachi-shi**
**Ibaraki 319-1292 (JP)**

• **KATOH Shuji**
**Hitachi-shi**
**Ibaraki 319-1292 (JP)**
• **KATO Tetsuya**
**Hitachi-shi**
**Ibaraki 319-1293 (JP)**

(74) Representative: **Strehl Schübel-Hopf & Partner**
**Maximilianstrasse 54**
**80538 München (DE)**

(54) **POWER CONVERSION DEVICE**

(57)    In the prior art, there has been the problem, in the case of conducting, for a fixed time, rated operation of a power conversion device (hereinafter referred to as a Multi Modular Converter, an "MMC") constituted by connecting, in bridge mode, arms composed of one or a plurality of series-connected (cascaded) unit converters, and carrying out a heat run test of each component thereof, that a test power supply with a rated capacity equal to or greater than that of the aforementioned MMC becomes necessary. The present invention is an MMC characterized in that active power command values and/or reactive power command values are respectively supplied individually to arms (hereinafter referred to as a "positive-side group") connected with a positive-side DC bus line and arms (hereinafter referred to as a "negative-side group") connected with a negative-side DC bus line, the two groups constituting the aforementioned MMC.

FIG. 1

**EP 2 506 415 A1**

**Description**

TECHNICAL FIELD

The present invention pertains to a power conversion device and a control method and a control device therefore.

BACKGROUND ART

Modular multilevel converters (hereinafter referred to as "MMC") use switching elements capable of on/off switching, such as IGBTs (Insulated Gate Bipolar Transistors), constitute a circuit method capable of outputting a voltage at or above the withstanding voltage of the aforementioned switching elements, and constitute a technology for which application to a Direct Current (HVDC) transmission system, a Static synchronous Compensator (STATCOM), a motor drive inverter, or the like, is expected.

Non Patent Literature 1 makes a disclosure regarding an MMC circuit method.

According to Non Patent Literature 1, an MMC is constituted by having arms, connected in bridge mode, that are constituted by one or a plurality of unit converters connected in series (hereinafter referred to as "cascade"). One half of the arms are connected with the positive-side DC bus line of the MMC and the remaining half are connected with the negative-side DC bus line of the MMC. In the present application, the arms connected with the aforementioned positive-side DC bus line are referred to as positive-side arms and the arms connected with the aforementioned negative-side DC bus line are referred to as negative-side arms. The aforementioned MMC is constituted by parallel connections of series circuits with a positive-side arm, two inductors, and a negative-side arm, the connection point of the two aforementioned inductors becoming the AC terminal of the aforementioned MMC.

Each unit converter is e.g. a bidirectional chopper circuit and is provided with a switching circuit and a DC capacitor. Each unit converter has external connections via at least two terminals and the voltage between the aforementioned two terminals can be controlled to be either the voltage of the DC capacitor that the concerned unit converter has, or zero.

In the case where each unit converter is controlled with PWM (Pulse Width Modulation), it is possible, by appropriately shifting the phase of the carrier wave supplied to each unit converter, to make the output voltage waveform of the MMC into a multi-level waveform. In this way, it is possible to reduce the harmonic components as compared with a two-level converter.

CITATION LIST

Non Patent Literature

Non Patent Literature 1: Makoto Hagiwara and Hirofumi Akagi, "PWM Control and Experiment of Modular Multilevel Converters", IEEJ Transactions on Industrial Applications, Vol. 128, Issue 7, pp. 957-965.

SUMMARY OF INVENTION

Technical Problem

In the case of performing rated operation, for a fixed time interval, of the aforementioned MMC controlled by means of conventional control methods and carrying out a heat release test of each component, there has been the problem that a test power supply with a rated capacity equal to or exceeding that of the aforementioned MMC was necessary (hereafter, the aforementioned heat release test will be referred to as a heat run test).

Also, in the case of implementing, in cooperation with the electric power grid, a test of carrying out rated operation of the aforementioned MMC controlled by means of conventional control methods, there has been the problem that there ended up flowing out electric power which was not originally necessary to the electric power grid. (Hereinafter, a test in which rated operation is carried out on an MMC linked with the electric power grid will be referred to as a "grid linkage test".)

Solution to Problem

In order to solve the aforementioned problem, the present invention is one that is characterized by providing, in a power conversion device constituted by connecting cascaded arms composed of one or a plurality of unit converters in bridge mode, a means of individually controlling active powers or reactive powers for, respectively, a cluster of positive-side group arms, connected with the positive-side DC bus line of the aforementioned power converter, and a cluster of

2

negative-side group arms, connected with the negative-side DC bus line.

In addition, the present invention is one that is characterized by providing, in a power conversion device constituted by connecting cascaded arms composed of one or a plurality of unit converters in bridge mode, individual control devices respectively for a cluster of positive-side group arms, connected with the positive-side DC bus line of the aforementioned power converter, and a cluster of negative-side group arms, connected with the negative-side DC bus line.

Also, the present invention is one that is characterized by providing, in a power conversion device constituted by connecting cascaded arms composed of one or a plurality of unit converters in bridge mode, an integrated control device controlling individually both a cluster of positive-side group arms, connected with the positive-side DC bus line of the aforementioned power converter, and a cluster of negative-side group arms, connected with the negative-side DC bus line.

Further, the present invention is one that is characterized by the fact that, in a power conversion device, the aforementioned positive-side and aforementioned negative-side group arm clusters respectively have three arms.

Further, the present invention is one that is characterized by the fact that, in a power conversion device, the aforementioned positive-side and aforementioned negative-side group arm clusters respectively have two arms.

Further, the present invention is one that is characterized by being provided with a current detection device detecting the electric current flowing in each of the arms belonging to the aforementioned positive-side group arm cluster and a current detection device detecting the electric current flowing in each of the arms belonging to the aforementioned negative-side group arm cluster.

Further, the present invention is one that is characterized in that, in a power conversion device, said positive-side group arm cluster control device has a function of feedback controlling the active power and/or the reactive power of the aforementioned positive-side group arm cluster, on the basis of at least the electric current flowing in each arm belonging the aforementioned positive-side group arm cluster and the DC voltage of each of the unit converters belonging to the aforementioned positive-side group arm cluster.

Further, the present invention is one that is characterized in that, in a power conversion device, said negative-side group arm cluster control device has a function of feedback controlling the active power and/or the reactive power of the aforementioned negative-side group arm cluster, on the basis of at least the electric current flowing in each arm belonging the aforementioned negative-side group arm cluster and the DC voltage of each of the unit converters belonging to the aforementioned negative-side group arm cluster.

Further, the present invention is one that is characterized in that, in a power conversion device, the aforementioned integrated control device has a function of feedback controlling the respective active and/or reactive powers of the positive-side and negative-side groups, on the basis of at least the electric current flowing in each of the arms and the DC voltage of each of the unit converters.

Further, the present invention is one that is characterized in that, in a power conversion device, the aforementioned unit converter is provided with:

a main circuit composed of a switching element and a DC capacitor;
a voltage sensor detecting the voltage of the aforementioned DC capacitor;
a unit converter control device being in charge of the operation of receiving a signal from the aforementioned positive-side group arm cluster control device or the aforementioned negative-side group arm cluster control device and generating a gate pulse of the aforementioned switching element and the operation of transmitting a signal from the aforementioned voltage sensor to the aforementioned positive-side group arm cluster control device or the aforementioned negative-side group arm cluster control device;
a gate driver receiving a gate pulse from the aforementioned unit converter control device and making the switching element turn on and off; and
a self-feeding power supply providing power supply to the aforementioned unit converter control device and gate driver.

Further, the present invention is one that is characterized in that, in a power conversion device, the aforementioned unit converter is provided with:

a main circuit composed of a switching element and a DC capacitor;
a voltage sensor detecting the voltage of the aforementioned DC capacitor;
a unit converter control device being in charge of the operation of receiving a signal from the aforementioned positive-side group arm cluster control device or the aforementioned negative-side group arm cluster control device and generating a gate pulse of the aforementioned switching element and the operation of transmitting a signal from the aforementioned voltage sensor to the aforementioned positive-side group arm cluster control device or the aforementioned negative-side group arm cluster control device;
a gate driver receiving a gate pulse from the aforementioned unit converter control device and turning the switching element on and off; and

a self-feeding power supply providing a power supply to the aforementioned unit converter control device and gate driver; and

connecting in parallel with the aforementioned DC capacitor, possibly via a DC/DC converter, a secondary battery or another energy accumulation or generation device.

Also, in order to solve the aforementioned problem, the present invention is one that is characterized, in a power conversion device constituted by connecting in bridge mode cascaded arms composed of one or a plurality of unit converters, by a having a function of respectively controlling the active power or the reactive power individually for a first arm cluster, connected with a first bus line of the concerned power conversion device, and a second arm cluster, connected with a second bus line thereof.

Further, the present invention is one that is characterized, in a power conversion device, by being provided with a switching means for individually switching on and off the aforementioned first and second arm clusters with respect to the electric power grid or a test power supply.

Also, in order to solve the aforementioned problem, the present invention is one that is characterized, in a power conversion device constituted by connecting in bridge mode cascaded arms composed of one or a plurality of unit converters, in that there is a difference in the active power or the reactive power of a positive-side group arm cluster connected with the positive-side DC bus line of the concerned power conversion device and that of a negative-side group arm cluster connected with the negative-side DC bus line.

According to the present invention, there is obtained the effect that it is possible to reduce the required capacity of the test power supply associated with a heat run test of the aforementioned power conversion device.

Also, according to the present invention, there is obtained the effect, in a grid linkage test, that it is possible to reduce the unnecessary electric power that is made to flow in the electric power grid by the aforementioned power conversion device.

Other objects, characteristics, and advantages of the present invention should become clear from the description below of the embodiments, related to the accompanying drawings, of the present invention.

BRIEF DESCRIPTION OF DRAWINGS

Fig. 1 is a diagram showing a three-phase MMC and control devices.
Fig. 2 is a diagram showing a unit converter.
Fig. 3 is a diagram showing a reactive power controller in a positive-side group.
Fig. 4 is a diagram showing an integrated positive-side and negative-side group control device.
Fig. 5 is a diagram showing a single-phase MMC and control devices.
Fig. 6 is a diagram showing a reactive power controller in the positive-side group of a single-phase MMC.
Fig. 7 is a diagram showing a three-phase MMC provided with a function of individually switching off positive-side and negative-side groups.
Fig. 8 is a diagram showing a three-phase MMC using a unit converter provided with a secondary battery.
Fig. 9 is a diagram showing unit converters provided with secondary batteries.
Fig. 10 is a diagram showing of an active power controller in a positive-side group.
Fig. 11 is an equivalent circuit diagram of a three-phase MMC.
Fig. 12 is an equivalent circuit diagram of a three-phase MMC with attention paid to the fundamental AC component.
Fig. 13 is a phasor diagram explaining reactive power transfer.
Fig. 14 is a phasor diagram explaining active power transfer.

DESCRIPTION OF EMBODIMENTS

Hereinafter, the present invention will be described together with the drawings. Further, the embodiments mentioned below indicate modes of the present invention, but the present invention is one including other embodiments, as long as the same do not depart from the substance thereof.

First Embodiment

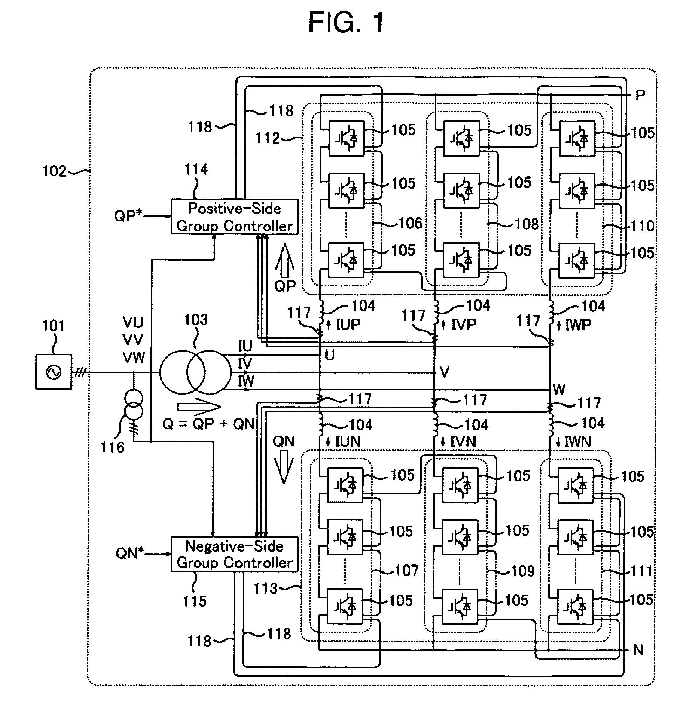

Regarding Embodiment 1 of the present invention, a description will be given using Fig. 1 to Fig. 3. As for the present embodiment, a statement will be given regarding the case of using the power conversion device of a three-phase MMC method power conversion device as a reactive power compensation device. Consequently, the power conversion device of this embodiment mainly controls reactive power.

In Embodiment 1, it is a characteristic that the reactive powers of a positive-side group and a negative-side group are controlled individually.

In Embodiment 1, it is taken to be an object to substantially reduce the required capacity of the test power supply used in a heat run test, as compared with the past.

Hereinafter, the general configuration of Embodiment 1 will be described using Fig. 1.

A power conversion device 102 is linked with a test power supply 101. Further, Fig. 1 is a drawing in which a heat run test is assumed. Moreover, in a grid linkage test or at the time of normal operation, power conversion device 102, instead of test power supply 101, is linked with the electric power grid.

Power conversion device 102 is composed of: a voltage transformer 103, inductors 104, unit converters 105, a positive-side group control device 114, a negative-side group control device 115, a voltage detection transformer 116, current detectors 117, and a signal wire 118 connecting positive-side group control device 114 or negative-side group control device 115 and unit converters 105 in a daisy chain.

In the present embodiment, the circuit connecting unit converters 105 in cascade is referred to as an "arm". Power conversion device 102 has six arms which are respectively referred to as a U-phase positive-side arm 106, a U-phase negative-side arm 107, a V-phase positive-side arm 108, a V-phase negative-side arm 109, a W-phase positive-side arm 110, and a W-phase negative-side arm 111.

Also, a unit converter 105 belonging to either of the two arms, positive-side and negative-side, of each phase is referred to, in order from that closest to positive-side DC bus line P, as the jth unit converter. In the case where the number of unit converters 105 belonging to the two arms of each phase is N, the result is that j = 1, 2, ..., N.

In the present embodiment, the three arms connected with positive-side DC bus line P, i.e. U-phase positive-side arm 106, V-phase positive-side arm 108, and W-phase positive-side arm 110, are named generically and referred to as positive-side group 112.

In addition, in the present embodiment, the three arms connected with negative-side DC bus line N, i.e. U-phase negative-side arm 107, V-phase negative-side arm 109, and W-phase negative-side arm 111, are named generically and referred to as negative-side group 113.

Next, there will be given a description regarding the parts in power conversion device 102 that are characteristic for the present invention.

Power conversion device 102 according to the present invention is provided with the respective individual control devices of positive-side group 112 and negative-side group 113, i.e. a positive-side group control device 114 and a negative-side group control device 115, the point that individual reactive power command values QP* and QN* are given respectively to positive-side group control device 114 and negative-side group control device being a characteristic one.

Each unit converter 105 belonging to positive-side group 112 is controlled by positive-side group control device 114 via signal wire 118 connected in a daisy chain.

Each unit converter 105 belonging to negative-side group 113 is controlled by negative-side group control device 115 via signal wire 118 connected in a daisy chain.

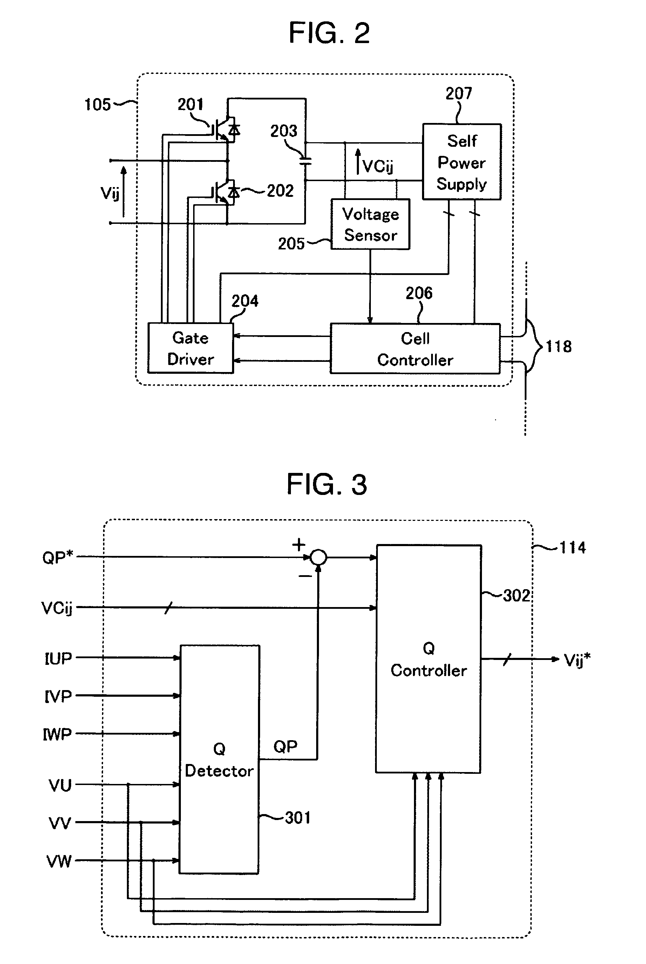

Hereinafter, there will be given a description of unit converter 105 using Fig. 2.

Unit converter 105 is composed of: a high-side switching element 201, a low-side switching element 202, a DC capacitor 203, a gate driver 204, a voltage sensor 205, a unit converter control device 206, and a self-feeding power supply 207 providing power supply to the aforementioned gate driver 204 and unit converter control device 206. Unit converter control device 206 is connected with positive-side group control device 114 or negative-side group control device 115 via signal wire 118 connected in a daisy chain.

Unit converter 105 shown in Fig. 2 is the jth unit converter of Phase i. Note that i = U, V, W and j = 1, 2, ..., N.

The main circuit of unit converter 105 shown in Fig. 2 is a bidirectional chopper circuit composed of a high-side switching element 201, a low-side switching element 202, and a DC capacitor 203, the present invention being valid in the case of taking this to be a full-bridge converter.

In the present embodiment, the output voltage of the jth unit converter of Phase i is referred to as $V_{ij}$ and the DC voltage is referred to as $VC_{ij}$.

Further, IGBTs are illustrated as high-side and low-side switching elements 201 and 202 in the present embodiment, but the present invention is valid even in the case where these are taken to be other switching elements capable of on/off control, such as GTOs (Gate Turn Off thyristors) and MOSFETs (Metal Oxide Semiconductor Field Effect Transistors).

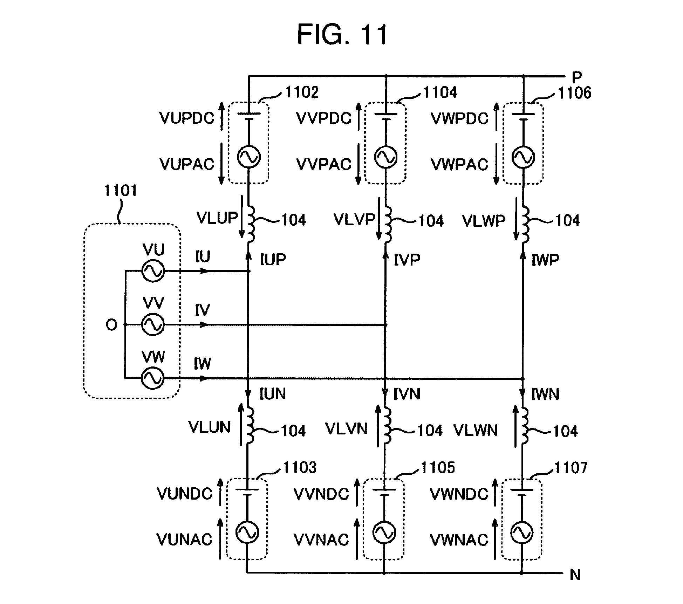

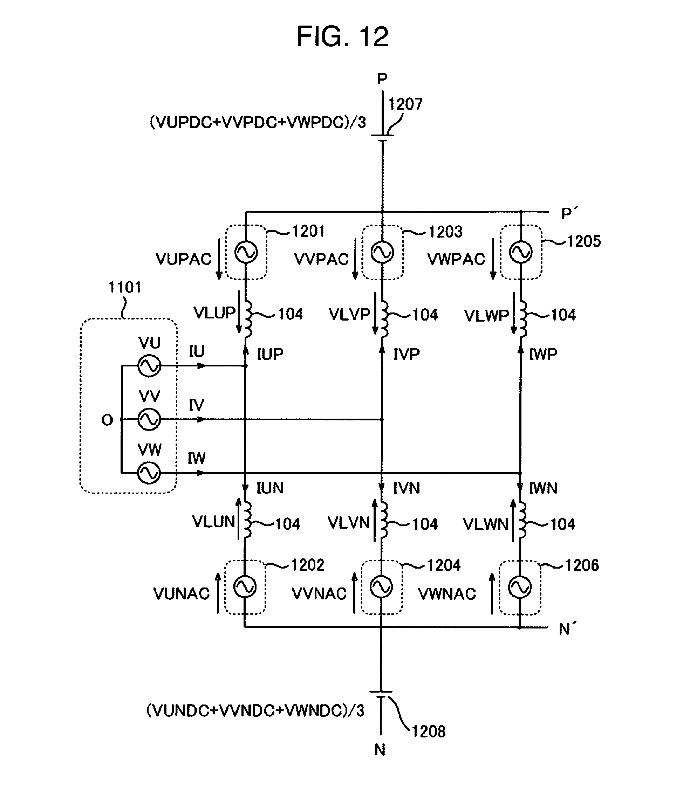

Here, using Fig. 11 and Fig. 12, there will be given a description regarding a method of individually controlling the reactive power of positive-side group 112 and negative-side group 113, which is a characteristic of the present invention. Here, in order to simplify the description, the winding ratio of voltage transformer 103 is taken to be 1 : 1 and there is taken to be no phase difference in the electromotive forces of the primary and secondary windings of the voltage transformer.

Fig. 11 is an equivalent circuit of Fig. 1. In Fig. 11, the ripple voltage and current generated in each circuit part due to IGBT switching are disregarded, attention only being paid to the DC component and the fundamental AC component. First, there will be given a description of each part of Fig. 11.

A voltage source 1101 indicates the voltages of the secondary windings of voltage transformer 103.

The output voltages of chopper cells 105 belonging to positive-side group 112 are controlled by positive-side group control device 114. In the present embodiment, the voltages across U-phase positive-side arm 106, V-phase positive-side arm 108, and W-phase positive-side arm 110, which are serially connected entities of chopper cells, are also controlled by positive-side group control device 114 so as to have a DC component and a fundamental AC component.

Also, the output voltages of chopper cells 105 belonging to negative-side group 112 are controlled by negative-side group control device 115. Consequently, the voltages across U-phase negative-side arm 107, V-phase negative-side arm 109, and W-phase negative-side arm 111, which are serially connected entities of chopper cells, are also controlled by negative-side group control device 115 so as to have a DC component and a fundamental AC component.

Accordingly, it is possible to carry out control so that each of arms 106 to 111 is considered to be a voltage source outputting a DC voltage component and a fundamental AC voltage. Consequently, in Fig. 11, U-phase positive-side arm 106, U-phase negative-side arm 107, V-phase positive-side arm 108, V-phase negative-side arm 109, W-phase positive-side arm 110, and W-phase negative-side arm 111 are respectively considered to be serially connected entities 1102 to 1107 (hereinafter simply referred to as "voltage sources") with a DC voltage source and a fundamental AC voltage source.

The DC output voltage of voltage source 1102, which is the equivalent circuit of U-phase positive-side arm 106, is taken to be VUPDC and the fundamental AC output voltage thereof is taken to be VUPAC.

The DC output voltage of voltage source 1103, which is the equivalent circuit of U-phase negative-side arm 107, is taken to be VUNDC and the fundamental AC output voltage thereof is taken to be VUNAC.

The DC output voltage of voltage source 1104, which is the equivalent circuit of V-phase positive-side arm 108, is taken to be VVPDC and the fundamental AC output voltage thereof is taken to be VVPAC.

The DC output voltage of voltage source 1105, which is the equivalent circuit of V-phase negative-side arm 109, is taken to be VVNDC and the fundamental AC output voltage thereof is taken to be VVNAC.

The DC output voltage of voltage source 1106, which is the equivalent circuit of W-phase positive-side arm 110, is taken to be VWPDC and the fundamental AC output voltage thereof is taken to be VWPAC.

The DC output voltage of voltage source 1107, which is the equivalent circuit of W-phase positive-side arm 111, is taken to be VWNDC and the fundamental AC output voltage thereof is taken to be VWNAC.

The potential difference between the neutral point (O point) of voltage source 1101 and the P point is, as shown in Math. 1, the average value of the DC output voltages of the three positive-side arms 106, 108, and 110 plus the fundamental AC zero-phase component V0 included in the voltages across arms 106, 108, and 110.

$$(VUPDC + VVPDC + VWPDC) / 3 + V0 \qquad [Math. 1]$$

The potential difference between the N point and the neutral point (O point) of voltage source 1101 is, as shown in Math. 2, the average value of the DC output voltages of the three negative-side arms 106, 108, and 110 plus the fundamental AC zero-phase component V0 included in the voltages across arms 107, 109, and 111.

$$(VUNDC + VVNDC + VWNDC) / 3 + V0 \qquad [Math. 2]$$

In the present embodiment, the DC output voltages VUPDC, VUNDC, VVPDC, VVNDC, VWPDC, and VWNDC of the respective arms 106 to 111 are controlled to be equal.

Consequently, by carrying out this kind of control, it is possible to consider the aforementioned DC voltages VUPDC, VUNDC, VVPDC, VVNDC, VWPDC, and VWNDC and the aforementioned fundamental zero-phase AC component V0 in isolation from the aforementioned fundamental AC components VUPAC, VVPAC, VWPAC, VUNAC, VVNAC, and VWNAC. If the DC voltage source and the aforementioned fundamental zero-phase AC component V0 are isolated and attention is only paid to the aforementioned fundamental AC components VUPAC, VVPAC, VWPAC, VUNAC, VVNAC, and VWNAC, the equivalent circuit shown in Fig. 12 is obtained.

In Fig. 12, as indicated in [Math. 1] and [Math. 2], the potentials of the O point, the P' point, and the N' point are equal.

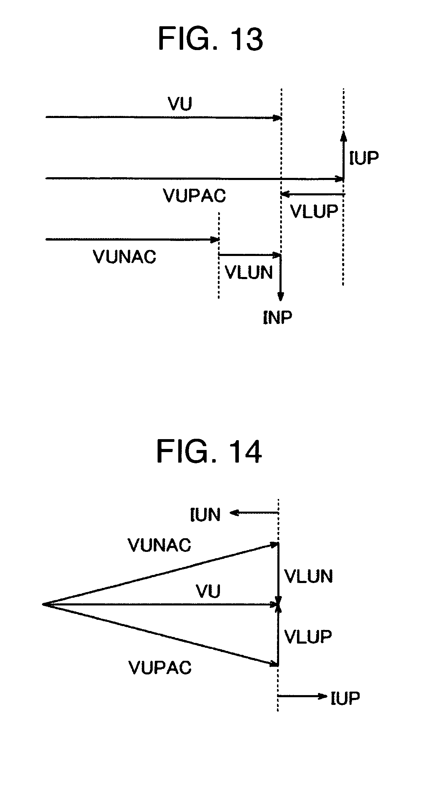

Hereinafter, using Fig. 13, there will be given a description of a method of controlling individually the reactive powers of positive-side group 112 and negative-side group 113. Further, there will here be given a description, by way of example, of making positive-side group 112 generate leading-phase reactive power and making negative-side group 113 generate lagging-phase reactive power.

Fig. 13 is a phasor diagram of the U-phase voltage VU of voltage source 1101, the fundamental AC output voltage VUPAC of U-phase positive-side arm 106, the fundamental AC output voltage VUNAC of U-phase negative arm 106, the impressed voltage VLUP of inductor 104 connected with U-phase positive-side arm 106, the impressed voltage VLNP of inductor 104 connected with U-phase negative-side arm 106, the current IUP flowing in U-phase positive-side arm 106, and the current IUN flowing in U-phase negative-side arm 107. Further, in Fig. 13, the counter-clockwise direction is the leading phase direction and the clockwise direction is the lagging phase direction. In Fig. 13, only the U phase is shown, but it is possible to draw phasor diagrams for both the V phase and the W phase by rotating the phase 120° at a time.

As shown in Fig. 13, regarding the U phase, VU = VUPAC + VLUP = VUNAC + VLUN. Also, regarding the V phase, VV = VVPAC + VLVP = VVNAC + VLVN and regarding the W phase, VW = VWPAC + VLWP = VWNAC + VLWN

In the case of making positive-side group 112 generate leading-phase reactive power, the amplitudes of the fundamental AC voltage VUPAC ofU-phase positive-side arm 106, the fundamental AC voltage VVPAC of V-phase positive-side arm 108, and the fundamental AC voltage VWPAC of W-phase positive-side arm 110 are respectively made higher than the amplitudes of VU, VV, and VW

In this way, the phases of the impressed voltages VLUP, VLVP, and VLWP of inductors 104 connected with positive-side group 112 respectively work out to be the opposite phases of the VU, VV, and VW phases.

Therefore, as shown in Fig. 13, the currents IUP, IVP, and IWP flowing in positive-side group 112 become currents lagging, to the extent of 90°, the impressed voltages VLUP, VLVP, and VLWP of inductors 104 connected with positive-side group 112, i.e. currents leading VU, VV, and VW by 90°, so positive-side group 112 generates leading-phase reactive power.

Similarly, in the case of making negative-side group 113 generate lagging-phase reactive power, the amplitudes of the fundamental AC voltage VUNAC of U-phase negative-side arm 107, the fundamental AC voltage VVNAC of V-phase negative-side arm 109, and the fundamental AC voltage VWNAC of W-phase negative-side arm 111 are respectively made lower than the amplitudes of VU, VV, and VW

In this way, the phases of impressed voltages VLUN, VLVP, and VLWP of inductors 104 connected with negative-side group 113 respectively work out to be the same phases as the VU, VV, and VW phases.

Consequently, as shown in Fig. 13 for the case of the U phase, the currents IUN, IVN, and IWN flowing in negative-side group 113 become currents lagging, to the extent of 90°, the impressed voltages VLUN, VLVN, and VLWN of inductors 104 connected with negative-side group 113, i.e. currents lagging VU, VV, and VW by 90°, so negative-side group 113 generates lagging-phase reactive power.

Further, in Fig. 13, there was given a description, by way of example, of a method of making positive-side group 112 generate leading-phase reactive power and making negative-side group 113 generate reactive power, but it is also possible to perform this in the opposite way.

Hereinafter, there will be given a description of the effects due to controlling individually the reactive powers of positive-side group 112 and negative-side group 113.

In order to conduct a heat run test for power conversion device 102, there is considered the case that it is necessary to carry out rated operation of each inductor 104 and each unit converter 105.

In prior-art control methods, one reactive power command value was supplied to power conversion device 102. Since the current flowing in accordance with this reactive power is supplied from test power supply 101, it is taken to be necessary for test power supply 101 to have a rated power capacity equal to or greater than that of power conversion device 102.

Moreover, in the present embodiment, it is taken to be a characteristic that the reactive powers of positive-side group 112 and negative-side group 113 are controlled individually.

In the case where the positive-side group is generating leading-phase reactive power and the negative-side group is simultaneously generating lagging-phase reactive power, the reactive power flowing into test power supply 101 is diminished, the leading-phase reactive power from the positive-side group and the lagging-phase reactive power from the negative-side group being cancelled.

If the reactive power generated by the positive-side group is taken to be QP and the reactive power generated by the negative-side group is taken to be QN and the leading-phase reactive power is expressed with "positive" and the lagging-phase reactive power with "negative", the leading-phase reactive power Q that is output from power conversion device 102 to test power supply 101 works out to Q = QP + QN.

If the rated reactive power of power conversion device 102 is taken to be QR and in the case where a heat run test is carried out, it is chosen that QP* = QR / 2 and QN* = - QR /2. In the case where the reactive power control is ideal, it works out that QP = QP* = QR / 2 and QN = QN* = - QR / 2, so the reactive power output from power conversion device 102 to test power supply 101 works out ideally to Q = QP + QN = 0.

Consequently, according to the present invention, since test power supply 101 supplies only the active power corresponding to the power loss portion generated inside power conversion device 102, there is obtained the effect that it is possible to reduce the necessary capacity of test power supply 101 to substantially less than the rated reactive power.

Hereinafter, using Fig. 1 to Fig. 3, there will be given a description regarding positive-side and negative-side group control devices 114 and 115.

First, using Fig. 3, there will be given a description of the internal configuration of positive-side group control device 114. Positive-side group control device 114 is provided with a reactive power detection part 301 and a reactive power control part 302. Further, since the internal configuration of negative-side group control device 115 becomes one in which QP*, QP, IUP, IVP, and IWP in Fig. 3 are respectively replaced with QN*, QN, IUN, IVN, and IWN, an illustration thereof has been omitted.

Positive-side and negative-side group control devices 114 and 115 generally carry out a series of operations, described hereinafter, with a fixed period. This period is referred to as a control period. Hereinafter, there will be given a description representing the operation of positive-side control device 114. Since the operation of negative-side group control device 115 is the same as for positive-side group control device 114, a description thereof will be omitted.

Reactive power detection part 301 detects the positive-side group reactive power QP from the voltages VU, VV, and VW detected with voltage detection transformer 116 and the currents IUP, IVP, and IWP detected with current detector 117.

Also, reactive power control part 302 computes the fundamental AC component of output voltages $V_{ij}^*$ of the respective unit converters 105, on the basis of the error QP* - QP found by comparing the reactive power command value QP* with the reactive power QP detected by reactive power detection part 301, the respective unit converter DC voltages $VC_{ij}$ detected via signal wire 118, and the voltages VU, VV, and VW

In addition, reactive power control part 302 superposes, on the output voltage command values $V_{ij}^*$ of all unit converters 105, the same DC voltage components. In this way, no DC current can flow in power converter 102.

The computed output voltage command values $V_{ij}^*$ are transmitted via signal wire 118 to each of unit converters 105.

In this way, there is obtained the effect that it is possible to control more accurately the positive-side group reactive power command value QP by controlling the output voltage $V_{ij}$ of each chopper cell on the basis of the error QP* - QP obtained by comparing the positive-side arm reactive power command value QP* and the actual reactive power QP, i.e. by feedback controlling the reactive power QP.

Unit converter control device 206 shown in Fig. 2 delivers the DC voltage signals $VC_{ij}$ detected with voltage detector 205 to positive-side group control device 114 or negative-side group control device 115 via signal wire 118. Also, unit converter control device 206 generates a gate pulse for switching elements 201 and 202 on the basis of the output voltage command value $V_{ij}^*$ received from positive-side group control device 114 or negative-side group control device 115 and transmits the same to gate driver 204. Gate driver 204 controls the voltage between the gate emitters of high-side and low-side switching elements 201 and 202 on the basis of the gate pulse received from unit converter control device 206.

Further, in the present embodiment, the output voltage command values $V_{ij}^*$ of the respective unit converters 105 are transmitted from positive-side group control device 114 and negative-side group control device 115, but a method in which, in substitution for the output voltage command values $V_{ij}^*$, the gate pulses of switching elements 201 and 202 inside the respective unit converters 105 are transmitted is also possible.

Here, there will be given a description of one more effect of the present embodiment. In the case where power conversion device 102 is linked not with test power supply 101 but with the electric power grid to carry out a grid linkage test, there is obtained the effect that it is possible, by making respectively the positive-side and negative-side groups output reactive power with the same magnitude but with reversed polarity, to conduct the grid linkage test without discharging unnecessary electric power to the electric power grid.

Second Embodiment

Regarding Embodiment 2 of the present invention, a description will be given using Fig. 1 to Fig. 4. In Embodiment 1, as shown in Fig. 1, power conversion device 102 was controlled using two control devices referred to as positive-side group control device 114 and negative-side group control device 115. The present embodiment is one that integrates these into one control device. And then, regarding portions other than positive-side group control device 114 and negative-side group control device 115, these are the same as in Embodiment 1 unless something in particular is mentioned.

And then, according to the present embodiment, there are obtained the same effects as in Embodiment 1.

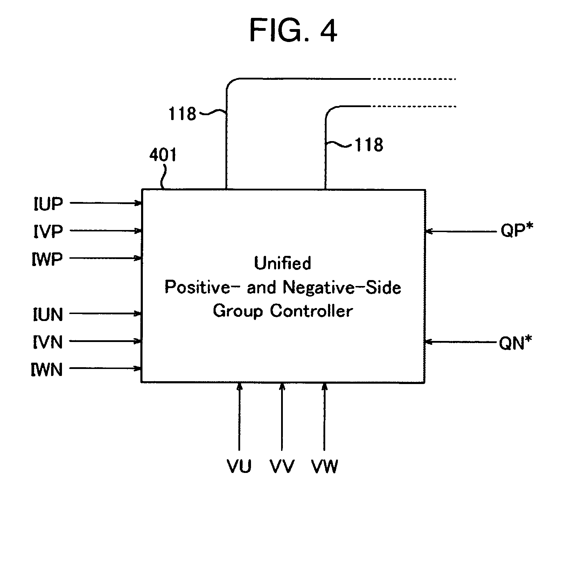

Fig. 4 represents a control device 401 integrating positive-side group control device 114 and negative-side group control device 115 into one control device. On the basis of the voltages VU, VV, and VW detected with voltage detection transformer 116, IUP, IVP, IWP, IUN, IVN, and IWN detected with current detector 117, the two reactive power command values QP* and QN*, and the DC voltages $VC_{ij}$ of the respective unit converters received via signal wire 118, the output voltage command values $V_{ij}*$ of the respective unit converters 105 are computed and are transmitted to the respective unit converters 105 via signal wire 118.

Further, the output voltage command values $V_{ij}*$ are transmitted from control device 401, but a method in which, in substitution for the output voltage command values $V_{ij}*$, the gate pulses for switching elements 201 and 202 inside the respective unit converters 105 are transmitted is also possible.

Third Embodiment

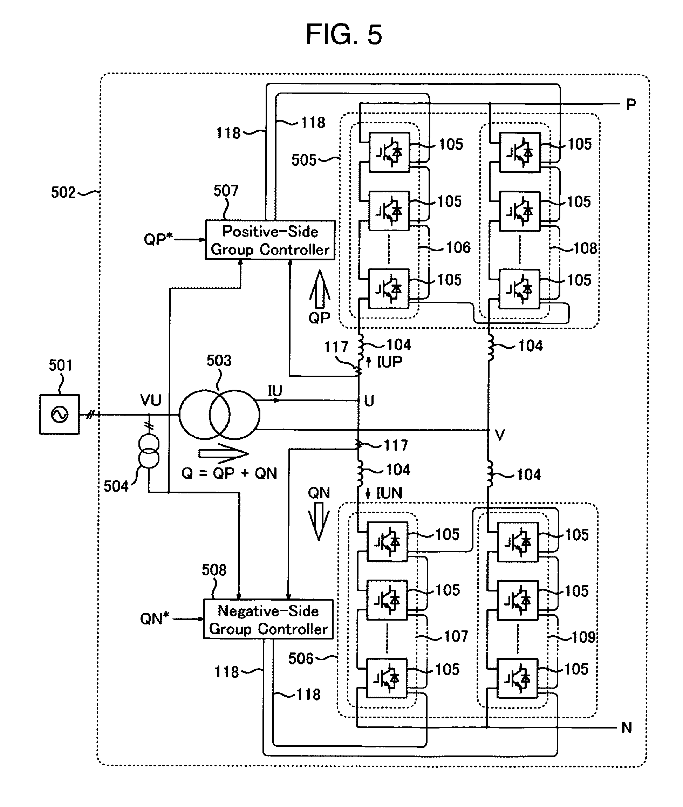

Regarding Embodiment 3 of the present invention, a description will be given using Fig. 5. In Embodiment 1, as for power conversion device 102, a three-phase MMC method was concerned. In the present embodiment, this is taken to be a single-phase MMC method.

And then, according to the present embodiment, the same effects as for Embodiment 1 can be obtained.

A power conversion device 502 is linked with a single-phase test power supply 501. Further, Fig. 5 is a drawing that assumes a heat run test. Moreover, during a grid linkage test or normal operation, power conversion device 502 is linked with a single-phase electric power grid, instead of with single-phase test power supply 501.

Power conversion device 502 is composed of a single-phase transformer 503, inductors 104, unit converters 105, a positive-side group control device 507, a negative-side group control device 508, a voltage detection transformer 504, a current detector 117, and a signal wire 118 transmitting control signals from positive-side group control device 507 and negative-side control device 508 to each of the unit converters.

Power conversion device 502 has four arms, being respectively referred to as a U-phase positive-side arm 106, a U-phase negative-side arm 107, a V-phase positive-side arm 108, and a V-phase negative-side arm 109.

The two arms connected with positive-side DC bus line P, i.e. U-phase positive-side arm 106 and V-phase positive-side arm 108, are named generically and are referred to as a "positive-side group". The respective unit converters 105 belonging to positive-side group 505 are controlled by positive-side control device 507 via signal wire 118 connected in a daisy chain.

The two arms connected with negative-side DC bus line N, i.e. U-phase negative-side arm 107 and V-phase negative-side arm 109, are named generically and are referred to as a "negative-side group" 113. The respective unit converters 105 belonging to negative-side group 113 are controlled by negative-side control device 508 via signal wire 118 connected in a daisy chain.

The configuration of unit converter 105 associated with the present invention is the same as that of Embodiment 1.

In power conversion device 502 of the single-phase MMC method according to the present invention, positive-side group 112 and negative-side group 113 are respectively provided with individual control devices, i.e. positive-side group control device 114 and negative-side group control device 113, the point that individual reactive power command values QP* and QN* are given respectively for positive-side group control device 114 and negative-side group control device 115 being a characteristic one.

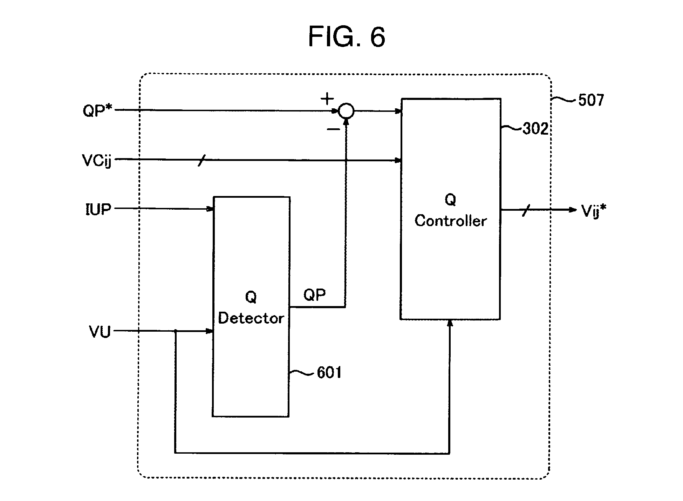

Hereinafter, there will be given a description of the internal configuration of positive-side group control device 507 using Fig. 6.

Positive-side group control device 507 is provided with a reactive power detection part 601 and a reactive power detection part 602. Since the internal configuration of negative-side group control device 508 becomes one in which QP*, QP, and IUP, in Fig. 6 are respectively replaced with QN*, QN, and IUN, an illustration thereof has been omitted.

Hereinafter, there will be given a description of the control of power conversion device 502 using Fig. 1, Fig. 2, Fig. 5, and Fig. 6.

Positive-side and negative-side group control devices 507 and 508 generally carry out a series of operations, described hereinafter, with a fixed period. This period is referred to as a control period. Hereinafter, there will be given a description representing the operation of positive-side control device 507. Since the operation of negative-side group control device 508 is the same as for positive-side group control device 507, a description thereof will be omitted.

Reactive power detection part 601 detects the reactive power QP of the positive-side group from the voltage VU detected with voltage detection transformer 116 and the current IUP detected with current detector 117.

Also, reactive power control part 602 computes the fundamental AC component of output voltages $V_{ij}*$ of the respective unit converters 105, on the basis of the error QP* - QP found by comparing the reactive power command value QP* with the reactive power QP detected by reactive power detection part 601, the respective unit converter DC voltages $VC_{ij}$ detected via signal wire 118, and the voltages VU, VV, and VW

In addition, reactive power control part 302 superposes, on the output voltage command values $V_{ij}*$ of all unit converters 105, the same DC voltage components. In this way, no DC current can flow in power converter 102.

The computed output voltage command values $V_{ij}*$ are transmitted via signal wire 118 to each of unit converters 105.

In this way, there is obtained the effect that it is possible to control more accurately the positive-side arm reactive power command value QP by controlling the output voltage $V_{ij}$ of each chopper cell on the basis of the error QP* - QP obtained by comparing the positive-side arm reactive power command value QP* and the actual reactive power QP.

Further, in the present embodiment, the output voltage command values $V_{ij}$* of the respective unit converters 105 are transmitted from positive-side group control device 114 and negative-side group control device 115, but a method in which, in substitution for the output voltage command values $V_{ij}$*, the gate pulses of switching elements 201 and 202 inside the respective unit converters 105 are transmitted is also possible.

Here, there will be given a description of another effect of the present embodiment. It is one which, in the case where power conversion device 102 is linked not with test power supply 101 but with the electric power grid to carry out a grid linkage test, has the effect that it is possible, by making respectively the positive-side and negative-side groups output reactive power with the same magnitude but with reversed polarity, to conduct the grid linkage test without discharging unnecessary electric power to the electric power grid.

Fourth Embodiment

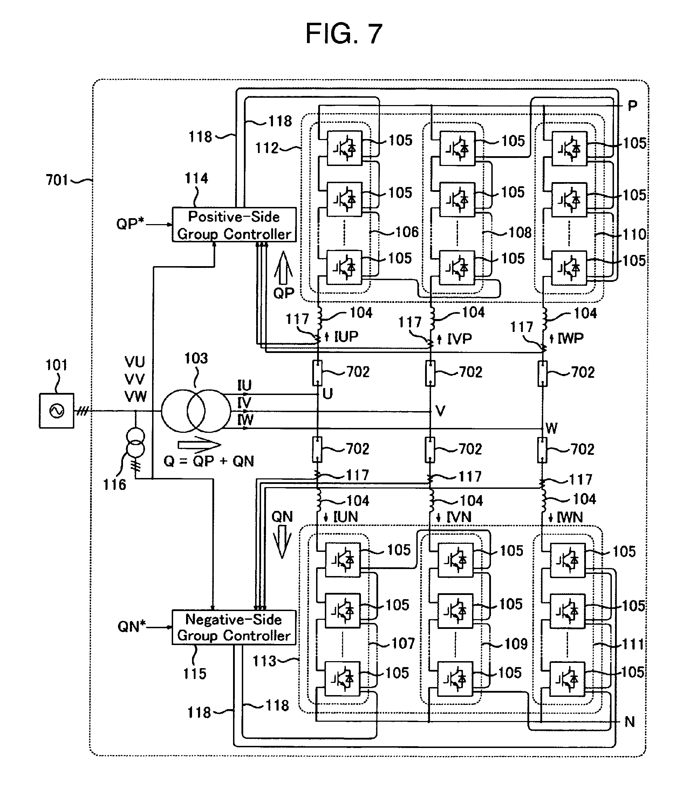

Regarding Embodiment 4 of the present invention, a description will be given using Fig. 7. As for characteristics of the present embodiment, there is the point that it is provided with circuit breakers or switches 702 for individually disconnecting the positive-side group and the negative-side group from the test power supply or the electric power grid.

And then, according to the present embodiment, it is possible to obtain the same effects as with Embodiment 1.

Further, there is provided the effect that, by being provided with circuit breakers or switches 702, it is possible, for one of positive-side group 112 and negative-side group 113, to be individually disconnected from the electric power grid in a state of conducting maintenance, and for the other to be linked to the electric power grid to continue operation.

Even in the case of opening up a circuit breaker or switch 702 connected in series with U-phase positive-side arm 106, V-phase positive-side arm 108, and W-phase positive-side arm 110 in order to conduct maintenance of positive-side group 112, there is obtained the effect that it is possible to continue reactive power compensation operation by supplying a reactive power command value QN* to negative-side group control device and carrying out control such as shown in Embodiment 1.

Fifth Embodiment

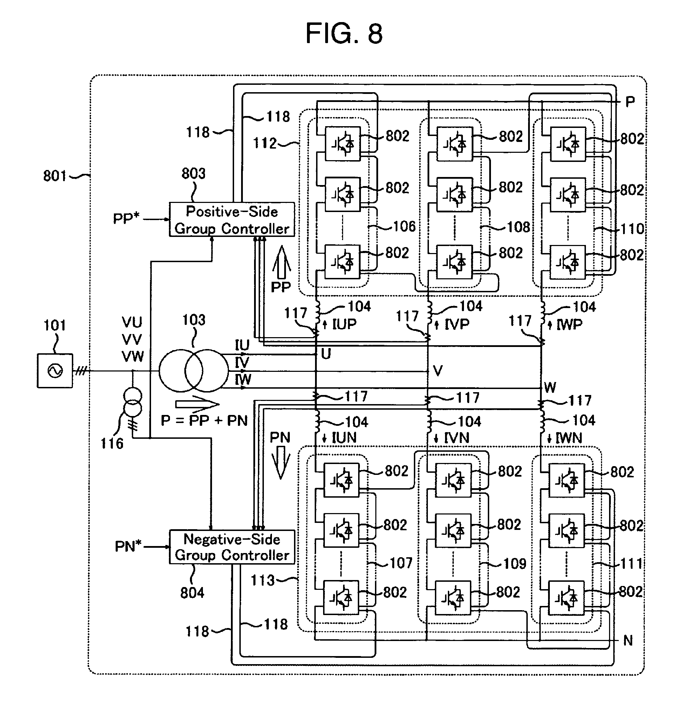

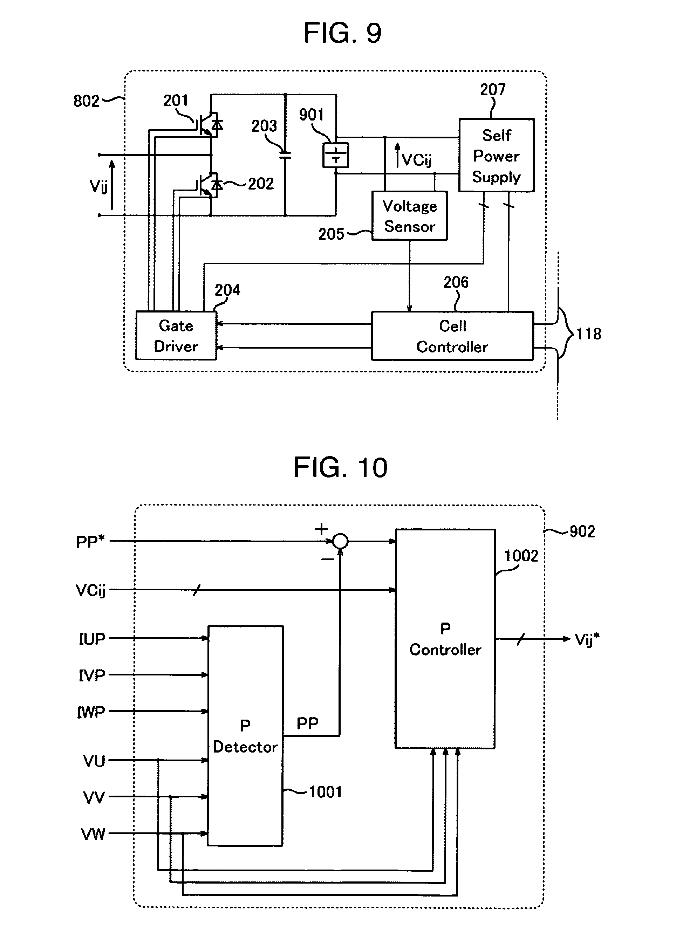

Regarding Embodiment 5 of the present invention, there will be given a description using Fig. 8 and Fig. 9.

In Embodiment 1, there was given a description in the case where a three-phase MMC method power conversion device is used as a reactive power compensation device. Moreover, in the present embodiment, there is shown a configuration in which a secondary battery is connected in parallel with the DC capacitor of each of the unit converters and the three-phase MMC method power conversion device is used as a power accumulation device.

In a power conversion device 801 according to the present embodiment, it is a characteristic that a positive-side group control device 803 and a negative-side group control device 804 are respectively provided in positive-side group 112 and negative-side group 113 and positive-side group control device 803 and negative-side group control device 804 are individually given active power command values PP* and PN*.

And then, according to the present embodiment, there is obtained the same effect as in Embodiment 1.

Further, there will be given a description of another effect of the present embodiment. According to the present embodiment, it becomes possible to transmit energy from positive-side group 112 to negative-side group 113, or vice versa, so in this way, there is obtained the effect that a charge and discharge test of the secondary battery becomes possible without hardly any current flowing in test power supply 101.

Power conversion device 801 is linked with test power supply 101. Further, Fig. 8 is a drawing assuming an on-site test. Moreover, during a grid linkage test or during normal operation, power conversion device 802 is, in substitution for test power supply 101, linked with the electric power grid.

A point of difference between Fig. 8 and Fig. 1 is the point that a secondary battery is connected in parallel with the DC capacitor of each of unit converters 802. Also, another point of difference is the point that positive-side group control device 803 and negative-side group control device 804 of Fig. 8 control active power rather than reactive power.

Since a point of difference between Fig. 8 and Fig. 1 is the secondary battery connected with each of unit converters 802, Fig. 8 can, similarly to Fig. 1, be expressed with the equivalent circuits of Fig. 11 and Fig. 12. Hereinafter, using Fig. 11, Fig. 12, and Fig. 14, there will be given a description of a method of controlling individually the active powers of positive-side group 112 and negative-side group 113. Here, in order to simplify the description, the winding ratio of voltage transformer 103 is taken to be 1 : 1 and there is taken to be no phase difference in the electromotive forces of the primary and secondary windings of the voltage transformer.

Hereinafter, using Fig. 14, there will be given a description of controlling individually the reactive powers of positive-side group 112 and negative-side group 113. Further, there will here, by way of example, be given a description in the case where positive-side group 112 is absorbing active power and negative-side group 113 is discharging active power.

Fig. 14 is a phasor diagram of the U-phase voltage VU of voltage source 1101, the fundamental AC output voltage VUPAC of U-phase positive-side arm 106, the fundamental AC output voltage VUNAC of U-phase negative-side arm 105, the impressed voltage VLNP of inductor 104 connected with U-phase positive-side arm 106, the impressed voltage VLUN of inductor 104 connected with U-phase negative-side group 107, the current IUP flowing in U-phase positive-side arm 106, and the current INP flowing in U-phase positive-side arm 106. Further, in Fig. 14, the counter-clockwise direction is the leading-phase direction and the clockwise direction is the lagging-phase direction. In Fig. 14, only the U phase is shown, but it is possible to draw phasor diagrams for both the V phase and the W phase by rotating the phase 120° at a time.

As shown in Fig. 14, regarding the U phase, VU = VUPAC + VLUP = VUNAC + VLUN Also, regarding the V phase, VV = VVPAC + VLVP = VVNAC + VLVN, and regarding the W phase, VW = VWPAC + VLWP = VWNAC + VLWN

In the case where positive-side group 112 is made to absorb active power, the fundamental AC voltage VUPAC of U-phase positive-side arm 106, the fundamental AC voltage VVPAC of V-phase positive-side arm 108, the fundamental AC voltage VWPAC of W-phase positive-side arm 110 are respectively made to lag behind VU, VV, and VW

In this way, the phases of impressed voltages VLUP, VLVP, and VLWP of inductors 104 connected with positive-side group 112 work out to respectively lead the phases of VU, VV, and VW by 90°.

Consequently, as shown in Fig. 14, the currents IUP, IVP, and IWP flowing in positive-side group 112 work out to be currents that lag, to the extent of 90°, the phases of the impressed voltages VLUP, VLVP, and VLWP of inductors 104 connected with positive-side group 112, i.e. work out to be currents that have the same phases as VU, VV, and VW, so positive-side group 112 absorbs active power.

In the same way, in the case where negative-side group 113 is made to discharge active power, the phases of the fundamental AC voltage VUNAC of U-phase negative-side arm 107, the fundamental AC voltage VVPAC of V-phase negative-side arm 109, and the fundamental AC voltage VWNAC of W-phase negative-side arm 111 are made to respectively lead the phases of VU, VV, and VW

In this way, the phases of impressed voltages VLUN, VLVP, and VLWP of inductors 104 connected with negative-side group 113 work out to respectively lag the phases of VU, VV, and VW by 90°.

Therefore, as shown in Fig. 14, the currents IUN, IVN, and IWN flowing into negative-side group 113 are currents that lag, to the extent of 90°, the impressed voltages VLUN, VLVN, and VLWN of inductors 104 connected with negative-side group 113, i.e. work out to currents that are in opposite phase to VU, VV, and VW, so negative-side group 113 discharges active power.

Further, in Fig. 13, a description was given, by way of example, of a case in which positive-side group 112 absorbs active power and, simultaneously, negative-side group 113 discharges active power, but the opposite case is also possible.

Hereinafter, there will be given a description regarding the effects due to individually controlling the active powers of positive-side group 112 and negative-side group 113.

In order to conduct the heat run test of power conversion device 801, there is considered the case in which there is a need to carry out rated operation of each of inductors 104 and each of unit converters 105.

In prior-art control methods, one active power command value was given to power conversion device 801. Since the current flowing hand in hand with this reactive power is supplied from test power supply 101, test power supply 101 requires a capacity equal to or exceeding the rated power of power conversion device 801.

Moreover, in the present embodiment, it is a characteristic that the active powers of positive-side group 112 and negative-side group 113 are controlled individually.

In the case where the positive-side group absorbs active power and, simultaneously, the negative-side group discharges active power, the active power flowing into test power supply 101 becomes small, the active power absorbed by the positive-side group and the active power discharged by the negative-side group getting cancelled.

If the active powers absorbed by positive-side group 112 and negative-side group 113 are respectively taken to be PP and PN, and the absorbed active power is expressed with "positive" and the discharged active power with "negative", the active power P supplied from test power supply 101 to power conversion device 102 works out to P = PP + PN.

If the rated active power of power conversion device 102 is taken to be PR, in the case of carrying out a heat run test, it is taken that PP* = PR / 2 and PN* = - PR / 2. In the case where the reactive power control is ideal, the result is that PP = PP* = PR / 2 and PN = PN* = - PR / 2, so the active power absorbed by power conversion device 102 from test power supply 101 ideally works out to P = PP + PN = 0.

Consequently, according to the present embodiment, since test power supply 101 supplies only the active power corresponding to the electric power loss portion generated inside power conversion device 102, there is obtained the effect that it is possible to reduce the necessary capacity of test power supply 101 substantially below the rated active power.

Hereinafter, there will be given a description regarding the configuration of unit converter 802 using Fig. 9.

Unit converter 802 shown in Fig. 9 has nearly the same configuration as the unit converter shown in Fig. 2, but the point differs that a secondary battery 901 is connected in parallel with DC capacitor 203

Further, in Fig. 9, secondary battery 901 is directly connected in parallel with DC capacitor 203, but it is also possible to provide a DC/DC converter between DC capacitor 203 and secondary battery.

Hereinafter, using Fig. 8 to Fig. 10, there will be given a description regarding the operations of positive-side group control device 114 and negative-side group control device 115.

First, using Fig. 10, there will be given a description of the internal configuration of positive-side group control device 803. Positive-side group control device 114 is provided with an active power detection part 1001 and an active power control part 1002. Further, since the internal configuration of negative-side group control device 804 becomes one in which PP*, PP, IUP, IVP, and IWP in Fig. 10 are respectively replaced with PN*, PN, IUN, IVN, and IWN, an illustration thereof has been omitted.

Positive-side group control device 803 and negative-side group control device 804 generally carry out a series of operations, described hereinafter, with a fixed period. This period is referred to as a control period. Hereinafter, there will be given a description representing the operation of positive-side control device 114. Since the operation of negative-side group control device 804 is the same as for positive-side group control device 114, a description thereof will be omitted.

Active power detection part 1001 detects the active power PP of the positive-side group from the voltages VU, VV, and VW detected with voltage detection transformer 116 and the currents IUP, IVP, and IWP detected with current detector 117.

Also, active power control part 1002 computes the fundamental AC component of the output voltages $V_{ij}$* of the respective unit converters 802, on the basis of the error PP* - PP found by comparing the reactive power command value PP* with the active power PP detected by reactive power detection part 1001, the respective unit converter DC voltages $VC_{ij}$ detected via signal wire 118, and the voltages VU, VV, and VW

In addition, active power control part 1002 superposes, on the output voltage command values $V_{ij}$* of all unit converters 105, the same DC voltage components. In this way, no DC current can flow in power converter 801.

The computed output voltage command values $V_{ij}$* are transmitted via signal wire 118 to each of unit converters 105.

In this way, the output voltage $V_{ij}$ of each chopper cell is controlled on the basis of the error PP* - PP obtained by comparing the positive-side group active power command value PP* and the actual positive-side group active power PP. In other words, by feedback controlling the active power PP, there is obtained the effect that it is possible to control more accurately the positive-side group active power PP.

Further, in the present embodiment, the output voltage command values $V_{ij}$* of the respective unit converters 105 are transmitted from positive-side group control device 114 and negative-side group control device 115, but a method in which, in substitution for the output voltage command values $V_{ij}$*, the gate pulses of switching elements 201 and 202 inside the respective unit converters 105 are transmitted is also possible.

In the present embodiment, as shown in Embodiment 2, it is possible to use a control device integrating positive-side group control device 803 and negative-side group control device 804.

Further, even in the present embodiment, similarly to Embodiment 4, it is possible to connect a circuit breaker or switch in series with each arm and to individually enable disconnecting from the grid, or switching on, the positive-side and negative-side groups.

Further, in the present embodiment, respective unit converters 802 connected with a secondary battery were illustrated, but, instead of a secondary battery, it is also possible to connect an element that delivers and receives energy, such as a solar cell.

The aforementioned description was made regarding embodiments, but the present invention is not limited thereto, it being evident to a person skilled in the art that various changes and corrections are possible within the spirit and scope of the attached claims of the present invention.

INDUSTRIAL APPLICABILITY

A power conversion device of the present invention can be applied to a device controlling electric power such as a Voltage Direct Current (HVDC) transmission system, a Static synchronous Compensator (SATCOM), or a motor drive inverter.

REFERENCE SIGNS LIST

101            Test Power Supply

| | |
|---|---|
| 102, 502, 701, 801 | Power Conversion Device |
| 103 | Voltage Transformer |
| 104 | Inductor |
| 105 | Unit Converter |
| 106 | U-Phase Positive-Side Arm |
| 107 | U-Phase Negative-Side Arm |
| 108 | V-Phase Positive-Side Arm |
| 109 | V-Phase Negative-Side Arm |
| 110 | W-Phase Positive-Side Arm |
| 111 | W-Phase Negative-Side Arm |
| 112, 505 | Positive-Side Group |
| 113, 506 | Negative-Side Group |
| 114, 507, 803 | Positive-Side Group Control Device |
| 115, 508, 804 | Negative-Side Group Control Device |
| 116 | Voltage Detection Transformer |
| 117 | Current Detector |
| 118 | Signal Wire |
| 201 | High-Side Switching Element |
| 202 | Low-Side Switching Element |
| 203 | DC Capacitor |
| 204 | Gate Driver |
| 205 | Voltage Detector |
| 206, 902 | Unit Converter Control Device |
| 207 | Self-Feeding Power Supply |
| 301, 601 | Reactive Power Detection Part |
| 302 | Reactive Power Control Part |
| 401 | Integrated Positive-Side / Negative-Side Group Control Device |
| 501 | Single-Phase Test Power Supply |
| 502 | Reactive Power / DC Voltage Control Part |
| 503 | Single-Phase Voltage Transformer |
| 504 | Single-Phase Voltage Detection Transformer |
| 702 | Circuit Breaker or Switch |
| 802 | Unit Converter Connecting Secondary Battery |
| 901 | Secondary Battery |
| 1001 | Active Power Detection Part |
| 1002 | Active Power Control Part |
| 1101 | Voltage Source Expressing Voltage of Secondary Winding of Voltage Transformer 103 |
| 1102 | Equivalent Voltage Source of U-Phase Positive-Side Arm |
| 1103 | Equivalent Voltage Source of U-Phase Negative-Side Arm |
| 1104 | Equivalent Voltage Source of V-Phase Positive-Side Arm |
| 1105 | Equivalent Voltage Source of V-Phase Negative-Side Arm |
| 1106 | Equivalent Voltage Source of W-Phase Positive-Side Arm |
| 1107 | Equivalent Voltage Source of W-Phase Negative-Side Arm |
| 1201 | Equivalent Voltage Source of U-Phase Positive-Side Arm Considering the Fundamental AC Component Only |
| 1202 | Equivalent Voltage Source of U-Phase Negative-Side Arm Considering the Fundamental AC Component Only |
| 1203 | Equivalent Voltage Source of V-Phase Positive-Side Arm Considering the Fundamental AC Component Only |
| 1204 | Equivalent Voltage Source of V-Phase Negative-Side Arm Considering the Fundamental AC Component Only |
| 1205 | Equivalent Voltage Source of W-Phase Positive-Side Arm Considering the Fundamental AC Component Only |
| 1206 | Equivalent Voltage Source of W-Phase Negative-Side Arm Considering the Fundamental AC Component Only |
| 1207 | Average DC Voltage of Positive-Side Group |
| 1208 | Fundamental Zero-Phase Voltage of Positive-Side Group |
| 1209 | Average DC Voltage of Negative-Side Group |

1210                    Fundamental Zero-Phase Voltage of Negative-Side Group

**Claims**

1. A power conversion device constituted by connecting, in bridge mode, arms composed of one or a plurality of unit converters connected in series, comprising:

   a means of individually controlling the active power, or reactive power, for respectively a cluster of positive-side group arms, connected with a positive-side direct-current (DC) bus line of said power conversion device, and a cluster of negative-side group arms, connected with a negative DC bus line thereof.

2. A power conversion device constituted by connecting, in bridge mode, arms composed of one or a plurality of unit converters connected in series, comprising:

   individual control devices for respectively a cluster of positive-side group arms, connected with a positive-side direct-current (DC) bus line of said power conversion device, and a cluster of negative-side group arms, connected with a negative DC bus line thereof.

3. A power conversion device constituted by connecting, in bridge mode, arms composed of one or a plurality of unit converters connected in series, comprising:

   an integrated control device individually controlling both a cluster of positive-side group arms, connected with a positive-side direct-current (DC) bus line of said power conversion device, and a cluster of negative-side group arms, connected with a negative DC bus line thereof.

4. The power conversion device according to Claim 1, wherein said positive-side and said negative-side group arm clusters respectively have three arms.

5. The power conversion device according to Claim 1, wherein said positive-side and said negative-side group arm clusters respectively have two arms.

6. The power conversion device according to Claim 1, comprising:

   a current detector detecting the current flowing in each arm belonging to said positive-side group arm cluster and a current detector detecting the current flowing in arm belonging to said negative-side group arm cluster.

7. The power conversion device according to Claim 1, wherein:

   said positive-side group arm cluster control device has a function of feedback controlling the active power and/or the reactive power of said positive-side group arm cluster on the basis of at least the current flowing in each arm belonging to said positive-side group arm cluster and the DC voltage of each unit converter belonging to said positive-side group arm cluster.

8. The power conversion device according to Claim 2, wherein:

   said negative-side group arm cluster control device has a function of feedback controlling the active power and/or the reactive power of said negative-side group arm cluster on the basis of at least the current flowing in each arm belonging to said negative-side group arm cluster and the DC voltage of each unit converter belonging to said negative-side group arm cluster.

9. The power conversion device according to Claim 3, wherein:

   said integrated control device has a function of feedback controlling the active and/or reactive powers of the respective positive-side and negative-side groups on the basis of at least the current flowing in each arm and the DC voltage of each unit converter.

10. The power conversion device according to Claim 1, wherein said unit converter comprises:

a main circuit composed of a switching element and a DC capacitor;

a voltage sensor detecting the voltage of said DC capacitor;

a unit converter control device being in charge of the operation of receiving a signal, from said positive-side group arm cluster control device or said negative-side group arm cluster control device, and generating a gate pulse of said switching element, and the operation of transmitting a signal from said voltage sensor to said positive-side group arm cluster control device or said negative-side group arm cluster control device;

a gate driver receiving a gate pulse from said unit converter control device and making the switching element turn on and off; and

a self-feeding power supply providing power supply to said unit converter control device and gate driver.

**11.** The power conversion device according to Claim 1, wherein said unit converter comprises:

a main circuit composed of a switching element and a DC capacitor;

a voltage sensor detecting the voltage of said DC capacitor;

a unit converter control device being in charge of the operation of receiving a signal, from said positive-side group arm cluster control device or said negative-side group arm cluster control device, and generating a gate pulse of said switching element, and the operation of transmitting a signal from said voltage sensor to said positive-side group arm cluster control device or said negative-side group arm cluster control device;

a gate driver receiving a gate pulse from said unit converter control device and making the switching element turn on and off; and

a self-feeding power supply providing a power supply to said unit converter control device and gate driver; and connecting in parallel with said DC capacitor, possibly via a DC/DC converter, a secondary battery or another energy storage or generation device.

**12.** A power conversion device constituted by connecting, in bridge mode, arms composed of one or a plurality of unit converters connected in series, having a function of individually controlling the active power, or the reactive power, of respectively a first arm cluster, connected with a first bus line of said power conversion device, and a second arm cluster, connected with a second bus line thereof.

**13.** The power conversion device according to Claim 12, comprising a switching means for individually switching on and off said first and second arm clusters with respect to the grid or a test power supply.

**14.** A power conversion device constituted by connecting, in bridge mode, arms composed of one or a plurality of unit converters connected in series, wherein:

the active powers, or reactive powers, of the positive-side group arm cluster connected with a positive-side DC bus line of said power conversion device and the negative-side group arm cluster connected with the negative-side bus line thereof are different.

**Amended claims under Art. 19.1 PCT**

**1.** A power conversion device constituted by connecting, in bridge mode, arms composed of one or a plurality of unit converters connected in series, comprising:

a means of individually controlling the active power, or reactive power, for respectively a cluster of positive-side group arms, connected with a positive-side direct-current (DC) bus line of said power conversion device, and a cluster of negative-side group arms, connected with a negative DC bus line thereof.

**2.** Deleted)

**3.** Deleted).

**4.** The power conversion device according to Claim 1, wherein said positive-side and said negative-side group arm clusters respectively have three arms.

**5.** The power conversion device according to Claim 1, wherein said positive-side and said negative-side group arm clusters respectively have two arms.

**6.** The power conversion device according to Claim 1, comprising:

a current detector detecting the current flowing in each arm belonging to said positive-side group arm cluster and a current detector detecting the current flowing in arm belonging to said negative-side group arm cluster.

**7.** The power conversion device according to Claim 1, wherein:

said positive-side group arm cluster control device has a function of feedback controlling the active power and/or the reactive power of said positive-side group arm cluster on the basis of at least the current flowing in each arm belonging to said positive-side group arm cluster and the DC voltage of each unit converter belonging to said positive-side group arm cluster.

**8.** Amended) A power conversion device constituted by connecting, in bridge mode, arms composed of one or a plurality of unit converters connected in series, comprising:

individual control devices for respectively a cluster of positive-side group arms, connected with a positive-side direct-current (DC) bus line of said power conversion device, and a cluster of negative-side group arms, connected with a negative DC bus line thereof, wherein:

said negative-side group arm cluster control device has a function of feedback controlling the active power and/or the reactive power of said negative-side group arm cluster on the basis of at least the current flowing in each arm belonging to said negative-side group arm cluster and the DC voltage of each unit converter belonging to said negative-side group arm cluster.

**9.** Amended) A power conversion device constituted by connecting, in bridge mode, arms composed of one or a plurality of unit converters connected in series, comprising:

an integrated control device individually controlling both a cluster of positive-side group arms, connected with a positive-side direct-current (DC) bus line of said power conversion device, and a cluster of negative-side group arms, connected with a negative DC bus line thereof, wherein:

said integrated control device has a function of feedback controlling the active and/or reactive powers of the respective positive-side and negative-side groups on the basis of at least the current flowing in each arm and the DC voltage of each unit converter.

**10.** The power conversion device according to Claim 1, wherein said unit converter comprises:

a main circuit composed of a switching element and a DC capacitor;
a voltage sensor detecting the voltage of said DC capacitor;
a unit converter control device being in charge of the operation of receiving a
signal, from said positive-side group arm cluster control device or said negative-side group arm cluster control device, and generating a gate pulse of said switching element, and the operation of transmitting a signal from said voltage sensor to said positive-side group arm cluster control device or said negative-side group arm cluster control device;
a gate driver receiving a gate pulse from said unit converter control device and making the switching element turn on and off; and
a self-feeding power supply providing power supply to said unit converter control device and gate driver.

**11.** The power conversion device according to Claim 1, wherein said unit converter comprises:

a main circuit composed of a switching element and a DC capacitor;
a voltage sensor detecting the voltage of said DC capacitor;
a unit converter control device being in charge of the operation of receiving a signal, from said positive-side group arm cluster control device or said negative-side group arm cluster control device, and generating a gate pulse of said switching element, and the operation of transmitting a signal from said voltage sensor to said positive-side group arm cluster control device or said negative-side group arm cluster control device;
a gate driver receiving a gate pulse from said unit converter control device and making the switching element turn on and off; and

a self-feeding power supply providing a power supply to said unit converter control device and gate driver; and connecting in parallel with said DC capacitor, possibly via a DC/DC converter, a secondary battery or another energy storage or generation device.

**12.** A power conversion device constituted by connecting, in bridge mode, arms composed of one or a plurality of unit converters connected in series, having a function of individually controlling the active power, or the reactive power, of respectively a first arm cluster, connected with a first bus line of said power conversion device, and a second arm cluster, connected with a second bus line thereof.

**13.** The power conversion device according to Claim 12, comprising a switching means for individually switching on and off said first and second arm clusters with respect to the grid or a test power supply.

**14.** Deleted)

# FIG. 1

# FIG. 2

# FIG. 3

# FIG. 4

IUP ———→

IVP ———→

IWP ———→

IUN ———→

IVN ———→

IWN ———→

118

118

401

Unified
Positive- and Negative-Side
Group Controller

←——— QP*

←——— QN*

VU  VV  VW

# FIG. 5

# FIG. 6

# FIG. 7

EP 2 506 415 A1

FIG. 8

24

EP 2 506 415 A1

## FIG. 9

## FIG. 10

# FIG. 11

# FIG. 12

P

$(VUPDC+VVPDC+VWPDC)/3$    $1207$

P′

1201    1203    1205

VUPAC    VVPAC    VWPAC

VLUP    104    VLVP    104    VLWP    104

1101

VU    IU    IUP    IVP    IWP

VV    IV

O

VW    IW

IUN    IVN    IWN

VLUN    104    VLVN    104    VLWN    104

1202    1204    1206

VUNAC    VVNAC    VWNAC

N′

$(VUNDC+VVNDC+VWNDC)/3$    $1208$

N

# FIG. 13

VU

IUP

VUPAC

VLUP

VUNAC

VLUN

INP

# FIG. 14

IUN

VUNAC

VLUN

VU

VLUP

VUPAC

IUP

## INTERNATIONAL SEARCH REPORT

| | International application No. |
|---|---|
| | PCT/JP2010/070353 |

**A. CLASSIFICATION OF SUBJECT MATTER**
*H02M7/49(2007.01)i, H02M7/5387(2007.01)i*

According to International Patent Classification (IPC) or to both national classification and IPC

**B. FIELDS SEARCHED**

Minimum documentation searched (classification system followed by classification symbols)
H02M7/49, H02M7/5387

Documentation searched other than minimum documentation to the extent that such documents are included in the fields searched
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2008/067784 A1 (SIEMENS AG.), 12 June 2008 (12.06.2008), entire text; all drawings & JP 2010-512133 A & US 2010/0067266 A & EP 2100364 A & DE 112006004197 A & CA 2671817 A & CN 101548458 A | 2-3,14 |
| A | WO 2008/067785 A1 (SIEMENS AG.), 12 June 2008 (12.06.2008), entire text; all drawings & JP 2010-512134 A & US 2010/0118578 A & EP 2100367 A & DE 112006004200 A & CA 2671818 A & CN 101553977 A | 1-14 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 January, 2011 (18.01.11) | 01 February, 2011 (01.02.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

EP 2 506 415 A1

<table>
<tr><th colspan="2">INTERNATIONAL SEARCH REPORT</th><th>International application No.<br>PCT/JP2010/070353</th></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-519692 A (Siemens AG.),<br>14 May 2009 (14.05.2009),<br>entire text; all drawings<br>& US 2008/0310205 A1 & EP 1927183 A<br>& WO 2007/033852 A2 & DE 102005045090 A<br>& CA 2623157 A & CN 101268607 A | 1-14 |
| A | JP 2003-189475 A (Fuji Electric Co., Ltd.),<br>04 July 2003 (04.07.2003),<br>entire text; all drawings<br>(Family: none) | 1-14 |
| A | HAGIWARA et al., "PWM Control and Experiment<br>of Modular Multilevel Converters", The<br>Transactions of the Institute of Electrical<br>Engineers of Japan D, 01 July 2008 (01.07.<br>2008), vol.128, no.7, pages 957 to 965 | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MAKOTO HAGIWARA ; HIROFUMI AKAGI.** PWM Control and Experiment of Modular Multilevel Converters. *IEEJ Transactions on Industrial Applications,* vol. 128 (7), 957-965